Europäisches Patentamt

European Patent Office

Office européen des brevets

(19)

(11) Veröffentlichungsnummer: **0 268 078**
**B1**

(12) **EUROPÄISCHE PATENTSCHRIFT**

(45) Veröffentlichungstag der Patentschrift:
09.05.90

(51) Int. Cl.⁵: **F16H 61/46**

(21) Anmeldenummer: **87115099.1**

(22) Anmeldetag: **15.10.87**

(54) Summen-Leistungsregelvorrichtung für wenigstens zwei hydrostatische Getriebe.

(30) Priorität: **14.11.86 DE 3638889**

(43) Veröffentlichungstag der Anmeldung:
**25.05.88 Patentblatt 88/21**

(45) Bekanntmachung des Hinweises auf die Patenterteilung:
**09.05.90 Patentblatt 90/19**

(84) Benannte Vertragsstaaten:
**DE FR GB IT SE**

(56) Entgegenhaltungen:
**DE-A- 2 038 968**
**DE-A- 2 754 430**
**DE-A- 3 323 278**
**DE-B- 2 219 269**
**GB-A- 1 500 836**

(73) Patentinhaber: **Hydromatik GmbH, Glockeraustrasse 2, D-7915 Elchingen 2(DE)**

(72) Erfinder: **Hoffmeister, Hermann, Starenweg 2, D-7916 Nersingen(DE)**
Erfinder: **Puvogel, Klaus, Herrenkellergasse 16, D-7900 Ulm(DE)**
Erfinder: **Schniederjan, Reinhold, Bregenzer Strasse 15, D-7910 Neu-Ulm 8(DE)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10, D-8000 München 22(DE)**

## Beschreibung

Die Erfindung bezieht sich auf eine Summen-Leistungsregelvorrichtung nach dem Oberbegriff des Patentanspruches 1.

Aus der DE-OS 2 038 968 ist eine derartige Summen-Leistungsregelvorrichtung für zwei gleichrangig geregelte hydrostatische Maschinen bekannt, bei welcher zur Ermittlung beziehungsweise Übertragung sowohl des Arbeitsdrucks als auch des Fördervolumens verstellbare Drosseln verwendet werden. Da jedoch die Verstellung der einen Drossel zwangsläufig auf die Wirkung der anderen Drossel Einfluß nimmt, ist die bekannte Regelvorrichtung mit dem Nachteil einer aufwendigen und schwierigen Regelung, verbunden mit Leistungsverlusten, behaftet.

Es ist Aufgabe der Erfindung, eine Leistungsregelvorrichtung der eingangs genannten Art so weiter zu entwickeln, daß bei Gewährleistung einer einfachen Bauweise und Funktion eine im wesentlichen 100%-ige Ausnutzung der zur Verfügung stehenden Leistung erreichbar ist.

Diese Aufgabe wird dadurch gelöst, daß der ersten Maschine ein Leistungs-Meßventil zugeordnet ist, das in Abhängigkeit von der Leistung der ersten Maschine eingestellt wird und entsprechend der eingestellten Stellung den Steuerdruck steuert.

Auf diese Weise gelangt an Stelle von Drosseln ein die jeweils vorhandene Leistungsaufnahme der ersten Maschine als Ergebnis ermittelndes Meßventil zum Einsatz, mit dem das der Leistungsaufnahme der ersten Maschine entsprechende Signal in einfacher Weise dem Leistungsregler der zweiten Maschine übertragen werden kann. Die erfindungsgemäße Vorrichtung ist von einfacher Bauweise und erlaubt ohne Leistungsverlust eine 100%-ige Ausnutzung der zur Verfügung stehenden Leistung.

Vorteilhafte Weiterbildungen der Erfindung sind in den Unteransprüchen beschrieben. Die Ausgestaltung nach Anspruch 3 ergibt eine Summen-Leistungsregelvorrichtung für gleichrangige Arbeitskreise unter Ausnützung der erfindungsgemäßen Vorteile.

Nachfolgend wird die Erfindung anhand von in vereinfachten Zeichnungen dargestellten bevorzugten Ausführungsbeispielen beschrieben. Es zeigt

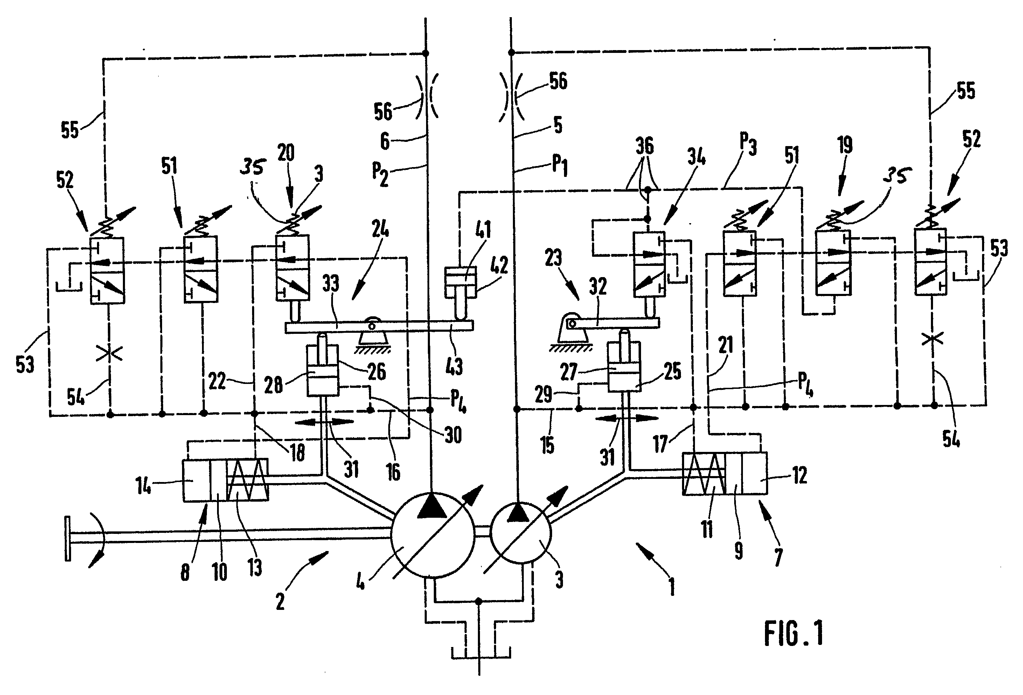

Fig. 1 eine erfindungsgemäß ausgestaltete Summen-Leistungs regelvorrichtung für zwei hydrostatische Maschinen, von denen die eine vorrangig geregelt ist,

Fig. 2 eine erfindungsgemäß ausgestaltete Summen-Leistungsregelvorrichtung für zwei hydrostatische Maschinen, die gleichrangig geregelt sind;

Fig. 3 eine erfindungsgemäß ausgestaltete Summen-Leistungsregelvorrichtung für gleichrangig geregelte hydrostatische Maschinen als weiteres Ausführungsbeispiel.

Bei allen Ausführungsbeispielen sind zwei mit 1 und 2 bezeichnete hydrostatische Getriebe vorgesehen, mit jeweils einer Hydropumpe 3, 4 veränderlichen Fördervolumens, die durch eine gemeinsame, nicht dargestellte Antriebsmaschine, insbesondere konstanter Drehzahl, z.B. einem Dieselmotor, angetrieben sind. Die zugehörigen Hydromotoren sind nicht dargestellt. Die Arbeitskreise bzw. -leitungen sind mit 5, 6 bezeichnet.

Zur Verstellung der Hydropumpen 3, 4 sind einander gleiche Verstellvorrichtungen 7, 8 mit beiderseits beaufschlagbaren Verstellkolben 9, 10 vorgesehen, die jeweils erste und zweite Arbeitskammern 11, 12, 13, 14 begrenzen. Die jeweils erste Arbeitskammer 11, 13 ist über Verbindungsleitungen 15, 16, 17, 18 mit dem Arbeitsdruck beaufschlagbar, während die jeweils zweite Arbeitskammer 12, 14 jeweils mit einem durch Leistungs-Regelventile 19, 20 geregelten Steuerdruck beaufschlagbar sind, der den zweiten Arbeitskammern 12, 14 durch Verbindungsleitungen 21, 22 zugeführt wird.

Jedes Regelventil 19, 20 ist einem allgemein mit 23, 24 bezeichneten Leistungsregler zugehörig, der den Steuerdruck in Abhängigkeit vom Arbeitsdruck und vom Fördervolumen der zughörigen Hydropumpe 3, 4 regelt. Hierzu weist jeder Leistungsregler 23, 24 einen hydraulischen Zylinder 25, 26 auf, deren Kolben 27, 28 durch eine Verbindungsleitung 29, 30 mit dem Arbeitsdruck beaufschlagbar sind. Die Zylinder 25, 26 sind mechanisch mit den Kolbenstangen der Verstellkolben 9, 10 verbunden, d.h. sie werden mit letzteren verschoben, vgl. Doppelpfeile 31. Die Kolben 27, 28 der Zylinder 25, 26 wirken jeweils gegen einen ortsfest schwenkbar gelagerten Hebelarm 32, 33, wobei der Hebelarm 32 des ersten Leistungsreglers 23 auf seiner dem Zylinder 25 abgewandten Seite vom Ventilschieber eines Leistungs-Meßventils 34 beaufschlagt ist, während der Hebelarm 33 des Leistungsreglers 24 auf seiner anderen Seite mit dem Ventilschieber des Regelventils 20 in Wirkverbindung steht, der durch eine Feder 35 veränderlicher Federkraft gegen den Hebelarm 33 beaufschlagt ist.

Das Meßventil 34 regelt einen im Verbindungs-Leitungszweig 36 vorhandenen Steuerdruck, der gegenüber dem in der Verbindungsleitung 21 vorhandenen Steuerdruck primär ist, weil er das Regelventil 19 beaufschlagt. Der primäre Steuerdruck ist deshalb mit $p_3$ bezeichnet im Unterschied zum Steuerdruck $p_4$ in der Verbindungsleitung 21 und im Unterschied zu den Arbeitsdrücken $p_1$ und $p_2$ in den Arbeitskreisen 5, 6. Der Steuerdruck $p_3$ beaufschlagt auch einen Kolben 41 in einem hydraulischen Zylinder 42, der gegen den Hebelarm 33 wirkt. Beim vorliegenden Ausführungsbeispiel ist ein zweiarmiger Hebelarm vorgesehen, dessen zweiter Hebelarm mit 43 bezeichnet ist, wobei der Kolben 41 gegen den Hebelarm 43 wirkt und ein Drehmoment erzeugt, das das vom Kolben 28 des Zylinders 26 erzeugte Drehmoment unterstützt, also dem Regelventil 20 entgegengesetzt ist.

Jedem Leistungsregler 23, 24 ist auch noch ein Druckbegrenzungsventil 51 und ein Load-Sensing-Ventil 52 zugeordnet, von denen das Druckbegrenzungsventil 51 dem Regelventil 19, 20 in der Verbindungsleitung 15/21 jeweils in Reihe nachgeordnet ist, während das Ventil 52 wie dargestellt in einer parallelen Verbindungsleitung 53 angeordnet und mittels Verbindungsleitungen 54, 55 vom Arbeitsdruck $p_1$ bzw. $p_2$ hinter einer Drossel 56 beaufschlagbar ist.

Im Betrieb der Hydropumpen 3, 4 wird dem zweiten Leistungsregler 24 mittels des Kolben 41 ein der Leistungsaufnahme der Hydropumpe 3 proportionales Drucksignal übertragen und zwar derart, daß mit zunehmendem Arbeitsdruck $p_1$ die Leistung der Hydropumpe 4 verringert wird. Die Hydropumpe 3 ist somit vorrangig geregelt. Dabei wird das von der ersten Hydrompumpe 3 nicht ausgenutzte Leistungsangebot bei einem Betrieb außerhalb des Regelbereichs oder sonstigen Übersteuerungen (Load-Sensing, Druckabschneidung) der zweiten Hydropumpe 4 übertragen, so daß eine im wesentlichen volle Leistungsausnutzung gewährleistet ist.

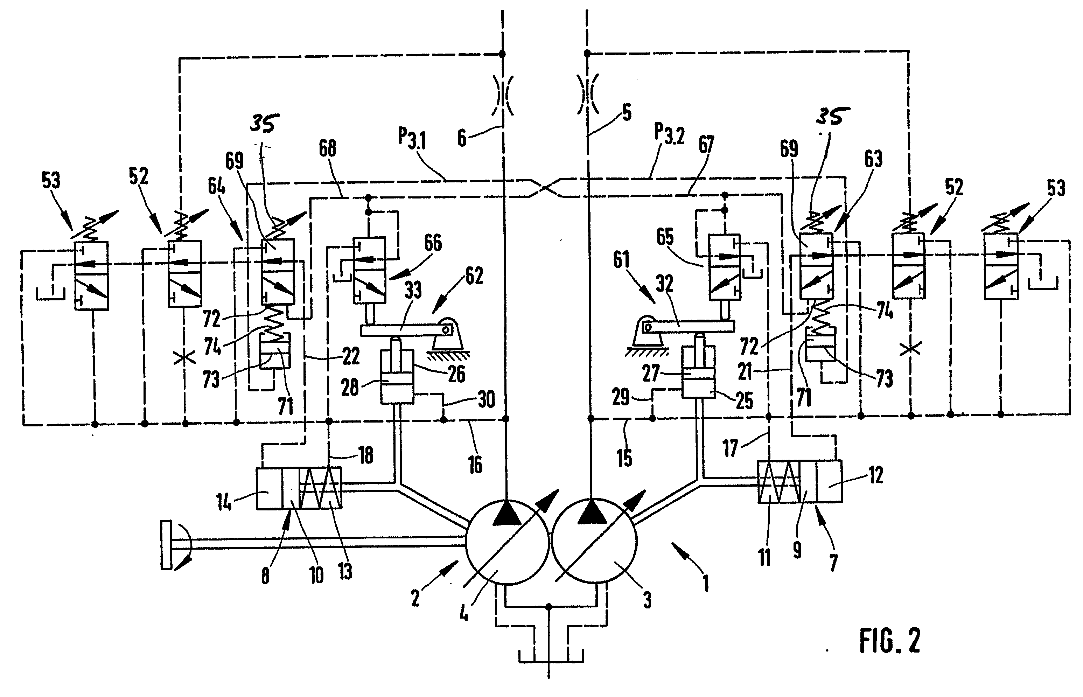

Beim Ausführungsbeispiel gemäß Fig. 2 sind gleiche Teile mit gleichen Positionszahlen bezeichnet. Das zweite Ausführungsbeispiel unterscheidet sich vom vorbeschriebenen im wesentlichen dadurch, daß jedem hier mit 61 und 62 bezeichneten Leistungsregler ein Leistungsregelventil 63, 64 und ein Leistungs-Meßventil 65, 66 zugeordnet sind, wobei die Regelventile 63, 64 durch Verbindungsleitungen 67, 68 mit dem von den Meßventilen 65, 66 geregelten Steuerdruck $p_{3.1}$ und $p_{3.2}$ beaufschlagbar sind. Außerdem sind die wie schon beim ersten Ausführungsbeispiel gegen eine Feder 86 verstellbarer Federkraft verschiebbaren Kolbenschieber der Regelventile 63, 64 zweiteilig ausgebildet, so daß jeder Kolbenschieberteil 69, 71 eine Beaufschlagungsfläche 72, 73 aufweist, wobei die Beaufschlagungsflächen 72, 73 jeweils in die gleiche Bewegungsrichtung wirken, und wobei zwischen den Kolbenschieberteilen 69, 71 eine Druckfeder 74 angeordnet ist.

Ferner ist die Reihenfolge der Anordnung der Ventile 52, der Druckbegrenzungsventile 53 und der Regelventile 63, 64 zum ersten Ausführungsbeispiel unterschiedlich. Beim zweiten Ausführungsbeispiel befindet sich das Ventil 52 in der Verbindungsleitung 15/21 jeweils mittig zwischen dem Druckbegrenzungsventil 53 und dem Regelventil 63 bzw. 64, wobei das Ventil 52 - gesehen von der Arbeitskammer 12, 14 aus - den Druckbegrenzungsventilen 51 jeweils nachgeordnet ist.

Beim zweiten Ausführungsbeispiel gemäß Fig. 2 sind die Hydropumpen 3, 4 gleichrangig geregelt, wobei die volle Ausnutzung des Leistungsangebotes wechselseitig erfolgt.

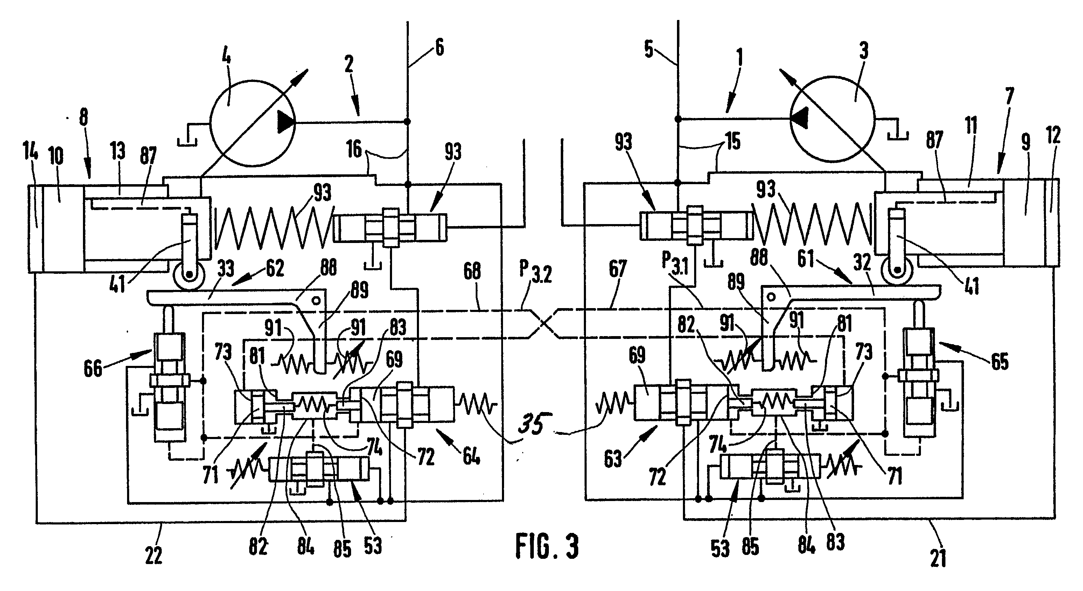

Das Ausführungsbeispiel gemäß Fig. 3 entspricht im wesentlichen dem Ausführungsbeispiel gemäß Fig. 2. Gleiche Teile sind ebenfalls mit gleichen Bezugszeichen versehen. Den mit 71 bezeichneten Kolbenschieberteilen der Regelventile 63, 64 sind auf der der Beaufschlagungsfläche 73 abgewandten Seite Anschläge 81 zugeordnet, wodurch der Einfluß der Steuerdrücke $p_{3.1}$ und $p_{3.2}$, die vom jeweils nicht zugehörigen Meßventil 65, 66 gesteuert, d.h. die vom jeweils nicht zugehörigen Hydromotor 3, 4 stammen, begrenzt ist, und zwar mit Beginn des jeweiligen Regelungsbereichs. Dagegen bleibt die Beaufschlagung des Regelventils 63, 44 mit dem jeweiligen Steuerdruck, der vom zugehörigen Meßventil 65, 66 geregelt wird, jeweils aufrechterhalten, um das Regelventil 63, 64 im Regelbereich zu steuern.

Die Kolbenschieberteile 69, 71 weisen jeweils einander zugewandte Kolben 82, 83 auf, die in einen Zylinder 84 hineinragen, in dem die Druckfeder 74 zwischen den Kolben 82, 83 angeordnet ist. Bei diesem Ausführungsbeispiel ist der Zylinder 84 durch eine Verbindungsleitung 85 mit dem vom jeweiligen Druckbegrenzungsventil 53 gesteuerten Druck verbunden, wodurch dieser Druck Einfluß nimmt sowohl auf das die Steuerkanten aufweisenden Steuerschieberteil 69 sowohl direkt als auch über einen später wirksamen Anschlag 81 aufgrund einer Vergrößerung des Abstandes zwischen den Kolbenschieberteilen 69, 71. Vorzugsweise ist außerdem der Anschlag 81 verstellbar.

Bei diesem Ausführungsbeispiel ist der Kolben 27 bzw. 28 des Zylinders 25 bzw. 26 jeweils im Verstellkolben 9, 10 der Verstellvorrichtung 7, 8 gelagert, wobei die zum Zylinder 25 bzw. 26 führende Verbindungsleitung 87 im jeweiligen Verstellkolben 9, 10 verläuft. Außerdem ist hier ein Winkelhebel 88 vorgesehen, gegen dessen Hebelarm 89 wenigstens einseitig, vorzugsweise beidseitig eine Druckfeder 91 wirkt, wobei die Federkraft wenigstens einer Druckfeder 91 verstellbar ist. Ferner sind bei diesen Ausführungsbeispielen die Rückstellfedern 93 für die Verstellkolben 9, 10 beispielhaft außerhalb der Verstellzylinder angeordnet.

Wie schon bei den vorbeschriebenen Ausführungsbeispielen ist auch beim Ausführungsbeispiel gemäß Fig. 3 erkennbar, daß die von den Meßventilen 34; 65, 66 geregelte Steuerdrücke $p_{3.1}$ und $p_{3.2}$ die Kolbenschieber der Meßventile 34, 65, 66 beaufschlagt.

Bei den in Fig. 3 mit 93 bezeichneten Ventilen, die, von der jeweiligen Arbeitsleitung 5, 6 aus gesehen, dem Regelventil 63, 64 in der Verbindungsleitung 15/21, 16/22 vorgeordnet ist, kann es sich um ein Load-Sensing-Ventil oder auch um ein Stromregelventil beispielsweise für Bedarfssteuerungen, z.B. Geschwindigkeitssteuerung handeln.

Bei den Ausführungsbeispielen gemäß Fig. 2 und 3, bei denen die Hydropumpen 3, 4 gleichrangig geregelt sind, muß das Regelsignal das die jeweils andere Hydropumpe beeinflußt, begrenzt werden. Bei zwei Hydropumpen mit gleich eingestellter Leistungskennlinie muß somit das Regelsignal entweder mechanisch oder hydraulisch auf die Hälfte begrenzt werden, was durch die Anschläge 81 bewirkt ist.

**Patentansprüche**

1. Summen-Leistungsregelvorrichtung für von einem gemeinsamen Antrieb angetriebene hydrostatische Maschinen (3, 4) von wenigstens zwei hydrostatischen Getrieben (1, 2), mit einer hydraulischen Verstellvorrichtung (7, 8) für jede, nämlich die erste und die zweite Maschine (3 bzw. 4), wobei der zweiten Maschine (4) ein hydraulischer Leistungsregler (24, 62) zugeordnet ist, der in Abhängigkeit der jeweils vorhandenen Leistung der zweiten Maschine (4) die Beaufschlagung der Verstellvorrichtung (8) regelt, und wobei dem Leistungsregler (24, 62) mittels eines hydraulischen Stellgliedes (41, 42) ein primärer Steuerdruck ($p_3$) übertragen wird, der vom Arbeitsdruck und dem Fördervolumen der ersten Maschine (3) abhängig ist, dadurch gekennzeichnet, daß der ersten Maschine (3) ein Leistungs-Meßventil (34, 65) zugeordnet ist, das in Abhängigkeit von der Leistung (Druck x Fördermenge) der ersten Maschine (3) eingestellt wird und entsprechend der eingestellten Stellung den primären Steuerdruck ($p_3$) steuert (Figur 1).

2. Summen-Leistungsregelvorrichtung nach Anspruch 1, dadurch gekennzeichnet, daß der ersten Maschine (3) ein hydraulischer Leistungsregler (23, 61) zugeordnet ist, der in Abhängigkeit der jeweils vorhandenen Leistung der ersten Maschine (3) die Beaufschlagung der Verstellvorrichtung (7) regelt, daß dem Leistungsregler (24, 62) der zweiten Maschine (4) ein Leistungs-Meßventil (66) zugeordnet ist, das in Abhängigkeit von der Leistung der zweiten Maschine (4) eingestellt wird und entsprechend der eingestellten Stellung einen primären Steuerdruck ($p_{3.2}$) steuert, der dem Leistungsregler (63) der ersten Maschine (3) übertragen wird (Figuren 2 und 3).

3. Summen-Leistungsregelvorrichtung nach Anspruch 1 oder 2, dadurch gekennzeichnet, daß die Verstellvorrichtungen (7, 8) Verstellzylinder mit doppelt wirksamen Verstellkolben (9, 10) aufweisen, deren eine Arbeitskammer (11, 13) mit dem Arbeitsdruck ($p_1$, $p_2$) der zugehörigen Maschine (3, 4) und deren andere Arbeitskammer (12, 14) mit sekundären Steuerdrücken ($p_4$) beaufschlagbar sind, die jeweils durch ein von den primären Steuerdrücken ($p_{3.1}$, $p_{3.2}$) beaufschlagtes Leistungs-Regelventil (19, 20, 63, 64) geregelt sind.

4. Summen-Leistungsregelvorrichtung nach Anspruch 3, dadurch gekennzeichnet, daß das Leistungs-Regelventil (20, 63, 64) zwei Beaufschlagungsflächen (72, 73) für die sekundären Steuerdrücke ($p_{3.1}$, $p_{3.2}$) aufweist.

5. Summen-Leistungsregelvorrichtung nach Anspruch 4, dadurch gekennzeichnet, daß die Beaufschlagungsflächen (72, 73) in die gleiche Verschieberichtung wirksam sind.

6. Summen-Leistungsregelvorrichtung nach Anspruch 5, dadurch gekennzeichnet, daß das Leistungs-Regelventil (20, 63, 64) einen zweiteiligen Kolbenschieber aufweist, daß jedes Kolbenschieberteil (69, 71) eine Beaufschlagungsfläche (72, 73) aufweist, und daß dem einen Kolbenschieberteil (73) ein die Ausschubbewegung begrenzender Anschlag (81) zugeordnet ist (Figur 3).

7. Summen-Leistungsregelvorrichtung nach Anspruch 6, dadurch gekennzeichnet, daß zwischen den Kolbenschieberteilen (69, 71) eine Feder, vorzugsweise eine Druckfeder (74), angeordnet ist.

8. Summen-Leistungsregelvorrichtung nach einem der Ansprüche 1 bis 7, dadurch gekennzeichnet, daß der Kolbenschieber des Leistungs-Meßventils (34, 65, 66) in Wirkverbindung mit einem vom Arbeitsdruck ($p_1$, $p_2$) der zugehörigen Maschine (3, 4) beaufschlagten Kolben (41) steht, der im zugehörigen Verstellkolben (9, 10) quer verschiebbar angeordnet und mit dem Verstellkolben (9, 10) verstellbar ist, wobei zwischen dem Kolbenschieber des Leistungs-Meßventils (34, 65, 66) und dem Kolben (41) ein Hebelarm (32, 33) angeordnet ist, der um eine ortsfeste, sich quer zur Achse des zugehörigen Verstellkolbens (9, 10) und quer zum Ventilschieber des Leistungs-Meßventils (34, 65, 66) erstreckende Achse schwenkbar ist.

9. Summen-Leistungsregelvorrichtung nach Anspruch 8, dadurch gekennzeichnet, daß der Hebelarm (32) durch eine Feder in eine Schwenkrichtung vorgespannt oder durch beidseitig angeordnete Federn (91) mittenzentriert ist, wobei vorzugsweise die Federkraft der oder einer Feder einstellbar ist.

## Revendications

1. Dispositif de régulation à sommation de puissance pour des machines hydrostatiques (3, 4) entrainées par un dispositif d'entraînement commun, apparatenant à au moins deux transmissions hydrostatiques (1, 2), comportant un dispositif de réglage hydraulique (7, 8) pour chaque machine, à savoir la première et la deuxième (3 et respectivement 4), un régulateur (24, 62) hydraulique de puissance étant affecté à la deuxième machine (4), lequel régule la contrainte appliquée au dispositif de réglage (8) en fonction de la puissance développée à tout moment dans la deuxième machine, et une pression de commande primaire ($p_3$) étant transférée au régulateur de puissance (24, 62) au moyen d'un organe de réglage hydraulique (41, 42) laquelle pression de commande est fonction de la pression de travail et du débit de la première machine (3), caractérisé par le fait qu'une valve de mesure de puissance (34, 65) est affectée à la première machine (3), laquelle valve est réglée en fonction de la puissance (pression X débit) de la première machine et commande la pression de commande primaire ($p_3$) selon la position de réglage (figure 1).

2. Dispositif de régulation à sommation de puissance selon la revendication 1, caractérisé par le fait qu'un régulateur de puissance hydraulique (23, 61) est affecté à la première machine (3), lequel régule la contrainte appliquée au dispositif de réglage en fonction de la puissance développée à tout moment dans la première machine (3), qu'une valve (66) de mesure de puissance est affectée au régulateur de puissance (24, 62) de la deuxième machine (4), lequel est réglé en fonction de la puissance de la deuxième machine (4) et commande une pression de commande primaire ($p_{3.2}$) en fonction de la position de réglage, laquelle pression de commande est transférée au régulateur de puissance (63) de la première machine (figures 2 et 3).

3. Dispositif de régulation à sommation de puissance selon la revendication 1 ou 2, caractérisé par le fait que les dispositifs de réglage (7, 8) présentent des cylindres de réglage comportant des pistons de réglage (9, 10) à double effet, dont une chambre de travail (11, 13) peut être placée sous l'effet de la pression de travail ($p_1$, $p_2$) de la machine correspondante (3, 4) et dont les autres chambres de travail (12, 14) peuvent être placées sous l'effet de pressions de travail secondaires (p₄), qui sont régulées dans chaque cas par une valve (19, 20, 63, 64) de régulation de pression placée sous l'effet des pressions de commande primaires ($p_{3.1}$, $p_{3.2}$).

4. Dispositif de régulation à sommation de puissance selon la revendication 3, caractérisé par le fait que la valve de régulation de puissance (20, 63, 64) présente deux surfaces de support de contrainte (72, 73) destinées aux pressions de commande secondaires ($p_{3.1}$, $p_{3.2}$).

5. Dispositif de régulation à sommation de puissance selon la revendication 4, caractérisé par le fait que les surfaces de support de contrainte (72, 73) agissent dans le même sens de déplacement.

6. Dispositif de régulation à sommation de puissance selon la revendication 5, caractérisé par le fait que la valve (20, 63, 64) de régulation de puissance présente un piston-tiroir en deux parties, que chacune des parties (69, 71) de piston-tiroir présente une surface de support de contrainte (72, 73) et qu'une butée (81) limitant le déplacement vers l'extérieur est affectée à une des parties (73) du piston-tiroir (figure 3).

7. Dispositif de régulation à sommation de puissance selon la revendication 6, caractérisé par le fait qu'un ressort, de préférence un ressort de compression (74) est disposé entre les parties (69, 71) de piston-tiroir.

8. Dispositif de régulation à sommation de puissance selon une des revendications 1 à 7, caractérisé par le fait que le piston-tiroir de la valve de mesure de puissance (34, 65, 66), est en liaison fonctionnelle avec un piston (41) placé sous l'effet de la pression de travail (p₁, p₂) de la machine (3, 4) correspondante, lequel piston est disposé de manière à pouvoir se déplacer transversalement dans le piston de réglage (9, 10) correspondant et peut être réglé au moyen du piston de réglage (9, 10), un bras de levier (32, 33) étant disposé entre le piston-tiroir de la valve (34, 65, 66) de mesure de puissance et le piston (41), lequel bras de levier est susceptible de pivoter sur un axe fixe qui s'étend transversalement à l'axe du piston de réglage (9, 10) correspondant et transversalement au tiroir de valve de la valve (34, 65, 66) de mesure de puissance.

9. Dispositif de régulation à sommation de puissance selon la revendication 8, caractérisé par le fait que le bras de levier (32) est mis sous contrainte préalable dans un sens de pivotement au moyen d'un ressort, ou bien qu'il est centré en position médiane sous l'effet de deux ressorts (91) disposés de chacun des deux côtés, la force de ressort des ressorts, ou d'un des ressorts étant de préférence réglable.

**Claims**

1. A summation power output regulating system for hydrostatic machines (3, 4) comprising at least two hydrostatic transmissions (1, 2), driven by a common drive, with a hydraulic control device (7, 8) for each, namely the first and the second, machine (3 and 4), wherein the second machine (4) is provided with a hydraulic power output regulator (24, 62) which regulates the pressure acting on the control device (8) in dependence on the power output from the second machine (4) and wherein a primary control pressure (P₃) which is dependent on the working pressure and the displacement of the first machine (3) is transmitted by means of a hydraulic actuator (41, 42) to the power output regulator (24, 62), characterised in that the first machine (3) is provided with a power output measuring valve (34, 65) which is adjusted in dependence on the power (pressure x amount displaced) of the first machine (3) and controls the primary control pressure (P₃) corresponding to the setting (Fig. 1).

2. A summation power output regulating system according to claim 1, characterised in that the first machine (3) is provided with a hydraulic power output regulator (23, 61) which regulates the pressure acting on the control device (7) in dependence on the power output from the first machine (3) and in that, associated with the power output regulator (24, 62) of the second machine (4) there is a power output measuring valve (66) which is adjusted in dependence on the power output of the second machine (4) and corresponding to the setting controls a primary control pressure ($P_{3.2}$) which is transmitted to the power output regulator (63) of the first machine (3) (Figs. 2 and 3).

3. A summation power output regulating system according to claim 1, characterised in that the control devices (7, 8) have control cylinders with double-acting pistons (9, 10), of which one working chamber (11, 13) can be subjected to the working pressure (P₁, P₂) of the associated machine (3, 4) and the other working chamber (12, 14) can be subjected to secondary control pressures (P₄), which are respectively regulated by a power output regulating valve (19, 20, 63, 64) acted on by the primary control pressures ($P_{3.1}$, $P_{3.2}$).

4. A summation power output regulating system according to claim 3, characterised in that the power output regulating valve (20, 63, 64) has two surfaces (72, 73) that can be acted on by the secondary control pressures ($P_{3.1}$, $P_{3.2}$).

5. A summation power output regulating system according to claim 4, characterised in that the surfaces (72, 73) are effective in the same direction of displacement.

6. A summation power output regulating system according to claim 5, characterised in that the power output regulating valve (20, 63, 64) has a two-part piston slide, each piston slide part (69, 71) having a surface (72, 73) acted on by pressure, and in that a stop (81) limiting the stroke is associated with one of the slide parts (73) (Fig. 3).

7. A summation power output regulating system according to claim 6, characterised in that a spring, preferably a pressure spring (74), is arranged between the piston slide parts (69, 71).

8. A summation power output regulating system according to any one of claims 1 to 7, characterised in that the piston slide of the power output measuring valve (34, 65, 66) is operatively connected with a piston (41) acted on by the operating pressure (P₁,

$P_2$) of the associated machine (3, 4), which is arranged in the associated control piston (9, 10) so that it can move transversely of and be adjusted with the control piston (9, 10) wherein, arranged between the piston slide of the power output measuring valve (34, 65, 66) and the piston (41), there is a lever arm (32, 33) which can be pivoted about a fixed axis extending transversely of the axis of the associated control piston (9, 10) and transversely of the valve slide of the power output measuring valve (34, 65, 66).

9. A summation power output regulating system according to claim 8, characterised in that the Lever arm (32) is urged by a spring in one direction of pivoting or is centred by springs (91) arranged on both sides of it, wherein the force of one or both of the springs is preferably adjustable.

FIG.1

EP 0 268 078 B1

FIG. 2

FIG. 3